# EUROPÄISCHE PATENTSCHRIFT

(11) **EP 3 848 185 B1**
(45) Veröffentlichungstag und Bekanntmachung des Hinweises auf die Patenterteilung: **05.02.2025**
(21) Anmeldenummer: 20213924.2
(22) Anmeldetag: 14.12.2020
(51) Int. Cl.: B29C 65/08, B60R 19/48, B29L 31/30, B29K 23/00

(54) **VERFAHREN ZUM ULTRASCHALLVERSCHWEISSEN ZWEIER KUNSTSTOFFKOMPONENTEN UND DADURCH HERGESTELLTE KUNSTSTOFFBAUTEILE**
METHOD FOR ULTRASONICALLY WELDING TWO PLASTIC COMPONENTS AND PLASTIC PARTS PRODUCED THEREBY
PROCÉDÉ DE SOUDAGE PAR ULTRASONS DE DEUX COMPOSANTS EN MATIÈRE PLASTIQUE ET PIÈCES EN MATIÈRE PLASTIQUE AINSI FABRIQUÉES

(30) Priorität: 09.01.2020 DE 102020200184
(43) Veröffentlichungstag der Anmeldung: 14.07.2021
(73) Patentinhaber: Magna Exteriors (Bohemia) s.r.o., 460 06 Liberec (CZ)
(72) Erfinder: ZDÁRSKÝ, Radim, 463 12 Liberec 25 (CZ); VOHLÍDALl, Ondrej, 460 01 Liberec 1 (CZ)
(74) Vertreter: Rausch, Gabriele

(56) Entgegenhaltungen:
- DE-A1- 10 160 496
- DE-A1- 102008 059 142
- DE-A1- 102013 223 166
- DE-A1- 102018 010 143
- JP-A- 2011 031 516
- KR-A- 20120 025 831
- US-A1- 2005 104 389

## Beschreibung

Die Erfindung betrifft ein Verfahren zum Ultraschallverschweißen zweier Kunststoffkomponenten unter Verwendung einer Sonotrode, wobei die Energie zum Verschweißen über ein oder mehrere Pins der Sonotrode in die Kunststoffkomponenten eingebracht wird.

Weiterhin betrifft die Erfindung Kunststoffbauteile, die nach dem Verfahren hergestellt sind.

### Stand der Technik

Vermehrt werden Stoßfänger mit Aufnahmen für Ultraschallsensoren für Einparkhilfen und Parkassistenten und Radarsensoren hergestellt.

Aus der DE10 2007 034 412 A1 ist eine für ein Kraftfahrzeug bestimmte Vorrichtung zur Überwachung eines Abstands des Fahrzeugs von einem Objekt mittels eines insbesondere als ein Ultraschallsensor ausgeführten Sensors zur Abstandsmessung bekannt, welche einen in einem Karosseriebereich des Kraftfahrzeugs, insbesondere an einem Kunststoffteil, wie beispielsweise ein Stoßfänger, mittels einer Anlagefläche fixierbaren, den Sensor aufnehmenden Halter aufweist. Weiterhin ist ein Ultraschall-Schweißverfahren zur Fixierung der Vorrichtung sowie ein Karosseriebauteil aus Kunststoff und einen an diesem fixierbaren Sensor offenbart.

Diese Vorrichtung wird unter der Bezeichnung "Parkpilot" oder "Park-Distance-Control" bereits vielfach eingesetzt. Bei diesem bekannten System erfassen im hinteren oder vorderen Stoßfänger eingebaute Abstandssensoren mögliche hinter dem Fahrzeug befindliche Objekte mittels Ultraschallimpulsen nach dem Echolotprinzip. Die Sensorsignale werden in einer Auswerte- und Steuereinrichtung ausgewertet, welche die Entfernung des nächsten erkannten Objekts errechnet. Sobald die Berechnung ergibt, dass ein Hindernis weniger als beispielsweise 1,2 m von dem Fahrzeug entfernt ist, erfolgt ein Warnsignal an den Fahrzeugführer in Form eines intermittierenden Tonsignals. Die Pause zwischen einzelnen Tönen des Warnsignals verkürzt sich mit der Annäherung an das Hindernis, bis das Warnsignal bei einer Entfernung von 30 cm in einen Dauerton übergeht. Gleichzeitig kann die Entfernung optisch auf einer mehrfarbigen Anzeige angezeigt werden, die im Fond des Fahrzeugs angebracht ist.

Da die Halter als Varianten des großflächigen Bauteils, also der Stoßfänger verbaut werden müssen, werden sie nicht gleich mitgespritzt, sondern nach Anforderung mit dem großflächigen Basisbauteil verschweißt.

Weiterhin ist es auch bekannt, die Halter mittels eines Ultraschall-Schweißverfahrens an der Karosserie zu befestigen. Hierzu sind die korrespondierenden Flächen der Anlagefläche sowie des Karosseriebereichs glattflächig ausgeführt, um so die Kontaktfläche so groß wie möglich zu gestalten. Als nachteilig erweist sich jedoch dabei, dass es durch den Energieeintrag beim Aufschmelzen der Kontaktfläche auf der sichtbaren Seite des Karosseriebereichs zu einer Beeinträchtigung des optischen Erscheinungsbildes kommen kann.

Aus der DE 10 2013 223 166 A1 ist eine Sonotrode für Utraschallschweißen bekannt, die eine Kontaktfläche aufweist und mindestens zwei Erhebungen, die von der Kontaktfläche hervorstehen.

Aus der DE 10 2008 059 142 A1 ist ein Verfahren zum kontinuierlichen Fügen von Bauteilen bekannt. Dabei wird die Sonotrode entlang einer Linie geführt und so die Bauteile aufgeschmolzen und zusammengepresst.

Aus der DE 10 2018 201 293 A1 ist bekannt, dass gerichtete Punktschweißungen mit einer Sonotrode erzeugt werden können, indem man die Sonotrode entlang der zu erzielenden Schweißnaht bewegt.

Die Schalleinkopplung erfolgt durch die mindestens zwei hervorstehenden Erhebungen bzw. Pins. Hierdurch wird eine ortsgenaue Schalleinkopplung gewährleistet, die weitgehend unabhängig von ggf. vorhandenen Bauteiltoleranzen oder Positionierungenauigkeiten ist. Somit lassen sich unerwünschte Schweißschlüsse in Randbereichen der Sonotrode und/oder des Bauteils bzw. Werkstücks vermeiden. Während des Schweißprozesses wird die Sonotrode so auf das Werkstück aufgesetzt, dass eine Mittellängsachse der Sonotrode senkrecht zur Oberfläche des Werkstücks verläuft. Die Schwingungseinkopplung erfolgt somit senkrecht in das Werkstück, d. h. die zu verschweißenden Bauteile, in Richtung der Mittellängsachse der Sonotrode.

Aus der JP2011031516A ist ein Verfahren zum Ultraschallverschweißen zweier Kunststoffkomponenten unter Verwendung einer Sonotrode bekannt, wobei die Energie zum Verschweißen über mindestens einen Pin der Sonotrode in die Kunststoffkomponenten eingebracht wird, wobei die beiden Kunststoffkomponenten Schritt für Schritt punktuell miteinander verschweißt werden.

DE 10 2018 010 143 A1 betrifft eine Sonotrode zum Ultraschallverschweißen eines ersten Elements mit einem zweiten Element, mit einem Grundkörper und zumindest einer Kontaktfläche mit darauf angeordneten und von der Kontaktfläche vorstehenden Kontaktpins, wobei zumindest drei oder mehr Kontaktpins vorgesehen sind und die Kontaktpins in Draufsicht auf die Kontaktfläche gesehen über die Kontaktfläche verteilt unsymmetrisch angeordnet sind.

US 2005 104 389 A1 zeigt einen Zusammenbau eines Verkleidungsteils aus thermoplastischem Material für ein Kraftfahrzeug mit einem anderen Teil, das einen dünnen Abschnitt aus thermoplastischem Material aufweist, wobei der dünne Abschnitt Öffnungen aufweist und das Schmelzen des Verkleidungsteils zusammen mit dem dünnen Abschnitt ausschließlich an den Umrissen der Durchgangsöffnungen lokalisiert ist.

DE 101 60 496 A1 betrifft eine Sonotrode für eine Ultraschall-Schweißanlage mit einem Ultraschall-Generator, der hochfrequente elektrische Energie an einen Konverter leitet, dieser die Energie in mechanische Schwingungen umwandelt und gegebenenfalls über einen Booster an eine Sonotrode leitet, wobei die Sonotrode mit einer Kontaktfläche ausgebildet ist.

KR 2012 0 025 831 A zeigt ein Verfahren zum Schweißen einer Stoßfängerverkleidung und einer Halterung durch Ultraschallschwingung. Ein Kunststoffbasismaterial wird so geformt, dass eine Stoßfängerverkleidung hergestellt wird. Ein voreingestellter Bereich der Stoßfängerverkleidung wird gebohrt, um eine Vielzahl von Öffnungen in der Stoßfängerverkleidung zu bilden. Eine Halteklammer mit Schweißvorsprüngen ist entsprechend einem Bereich angeordnet, in dem die Öffnungen der Stoßfängerverkleidung gebildet sind. Wenn die Schweißvorsprünge durch ein die Ultraschallschwingung übertragendes Werkzeughorn unter Druck gesetzt werden, wird die Halterung geschmolzen und mit der Stoßfängerverkleidung stumpfgeschweißt.

Es ist Aufgabe der Erfindung ein optimiertes Ultraschall-Schweißverfahren vorzuschlagen, das durch geringen Energieeintrag, die bestehenden Probleme minim iert.

Die Aufgabe wird gelöst mit einem Verfahren zum Ultraschallverschweißen zweier Kunststoffkomponenten unter Verwendung einer Sonotrode , wobei die Energie zum Verschweißen über mindestens zwei Pins der Sonotrode in die Kunststoffkomponenten eingebracht wird, wobei die beiden Kunststoffkomponenten Schritt für Schritt miteinander verschweißt werden, wobei der jeweils nachfolgende Schritt der Verschweißung in einem Bereich erfolgt, der bereits durch den vorhergehenden Schritt der Verschweißung beansprucht und entspannt ist.

Durch die schrittweise Verschweißung ist eine sehr gute Verbindung bei geringem Energieeintrag möglich.

Dabei erfolgen die einzelnen Schritte der Verschweißung räumlich nah aufeinander entlang eines Schweißpfads. Der Abstand ist durch die eingebrachte Energie vorgegeben, die den Bereich der Beeinflussung des Materials bestimmt.

Es ist dabei notwendig, dass die einzelnen Schritte der Verschweißung in einem zeitlichen Abstand aufeinanderfolgen, die es dem Material der Kunststoffkomponenten im Bereich einer Verschweißung ermöglicht, sich zu entspannen.

Dabei wird die Sonotrode entlang des Schweißpfads geführt.

Der Schweißpfad erstreckt sich linear, kreisförmig oder einer beliebigen Kontur folgend.

Dabei können die Pins der Sonotrode flach oder mit einer Spitze oder mit anderer spezifischer Kontur auf den zu verschweißenden Kunststoffkomponenten aufgesetzt werden.

Die Kunststoffkomponenten sind Stoßfänger und Halter für Sensoren, Verstärkungsteile und andere Teile mit dünnerer Wandstärke miteinander verschweißt werden sollen.

### Beschreibung der Figuren

Die Erfindung wird nachfolgend beispielhaft unter Bezugnahme auf die beigefügte Zeichnung beschrieben.
Fig. 1 zeigt eine schematische Darstellung eines Stoßfängers vorne,
Fig. 2 zeigt eine Sonotrode im Stand der Technik,
Fig. 3 zeigt beispielhafte Ausführungsformen für Sonotroden,
Fig. 4 zeigt einen beispielhaften Schweißpfad.

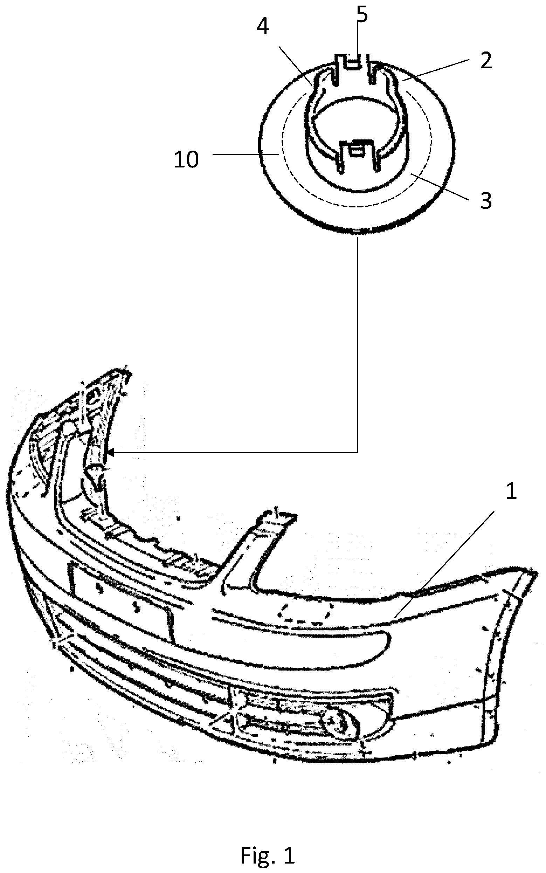

Figur 1 zeigt ein Ausführungsbeispiel mit einem beispielhaften Stoßfänger 1, wie er in der Front eines Fahrzeugs verwendet wird.

Auf der zu dem Fahrzeug gewandten Seite des Stoßfängers 1 werden Halter 2 für unterschiedliche Sensoren befestigt. Der beispielhaft dargestellte Halter 2 weist dabei eine ringförmige Anlagefläche 3 auf, sowie eine zylinderförmige Aufnahme 4. In die Aufnahme 4 wird ein Sensor gesteckt und über die an der Aufnahme angebrachten Laschen 5 verriegelt.

Die Anlagefläche 3 kann dabei natürlich auch quadratisch oder rechteckig sowie asymmetrisch ausgeführt sein, um eine genaue Lagebestimmung des Halters 2 am Stoßfänger 1 zu gewährleisten. Ein möglicher Schweißpfad 10 ist als kreisförm iger Pfad angedeutet.

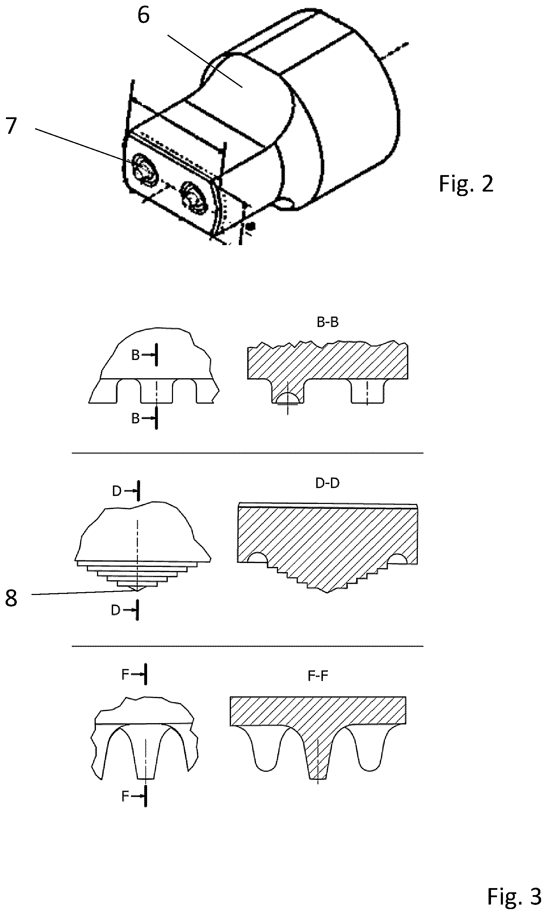

Das erfindungsgemäße Verfahren verwendet Ultraschallschweißen unter Verwendung einer Sonotrode 6, wie sie beispielhaft in Figur 2 dargestellt ist. Die Sonotrode 6 weist dabei in diesem Ausführungsbeispiel zwei Pins 7 auf.

Über eine solche Sonotrode 6 wird der Halter 2 mit dem Stoßfänger 1 punktuell an den beiden Pins 7 verschweißt. Als optimale Pingröße hat sich dabei ein Durchmesser von 0,8 bis 1,4 mm herausgestellt.

Im Beispiel eines Stoßfängers wird der Halter aus Polypropylen mit Talcum hergestellt.

Der Vorgang des Verschweißens erfolgt dabei Schritt für Schritt über eine Bewegung der Sonotrode 6 entlang der Anlagefläche 3 des Halters 2. Im Beispiel der Figur 1 bewegt sich die Sonotrode entlang einer Kreislinie im Bereich der ringförmigen Anlagefläche 3.

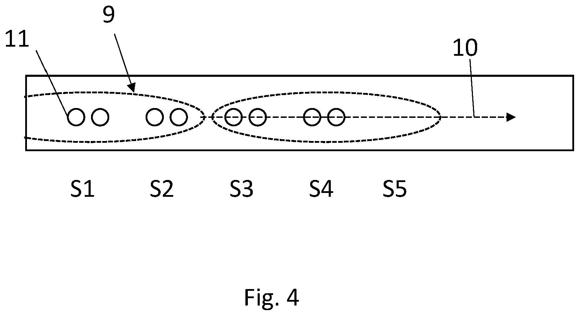

In der Figur 4 wird ein linearere Schweißpfad dargestellt. Die Schweißpunkte 11 werden durch die Verwendung einer Sonotrode mit zwei Pins paarweise gesetzt. Nach dem Schweißschritt S1 erfolgt der Schweißschritt S2 usw. Für den Schweißschritt S1 ist ein Bereich der Energiebeeinflussung 9 gekennzeichnet ebenso in Schweißschritt S4.

Dabei erfolgt nach dem ersten Schritt des Verschweißens, z. B S1, der nächste Schritt S2 in einem Bereich 9 des Kunststoffelements, der bereits durch den ersten Schweißschritt S1 einer spezifischen Belastung ausgesetzt war und sich wieder im Zustand der Entspannung befindet. Das heißt, dass für den zweiten Schweißschritt S2 weniger Energie, Stress und Wärmebeeinflussung aufbracht werden muss, als für S1, da das Material noch nicht wieder vollständig abgekühlt und ausgehärtet ist. Durch die schrittweise Verschweißung wird integral weniger Energie in die zu verschweißenden Komponenten eingebracht.

Dabei muss zwischen den einzelnen Schweißschritten S1, S2... ein gewisser zeitlicher Abstand vorliegen, um dem Material Gelegenheit zu geben, zu entspannen. Zur Durchführung des Verfahrens wird die Sonotrode 6 mechanisch entlang des Schweißpfads 10 bewegt. Das erfolgt über einen geeigneten elektrischen Motor oder einen pneumatischen Antrieb oder über einen Roboterarm. Die Zeit, die die Sonotrode benötigt, um über dem Werkstück bewegt zu werden, reicht aus, um den Ausheilungsprozess der letzten Schweißung weit genug vorankommen zu lassen.

Die verwendete Sonotrode 6 weist dabei ein Pin auf, kann aber auch 4, 5, 6, 7 oder 8 Pins aufweisen.

Beispiele für unterschiedliche Ausführungsformen der Pins 7 sind in Figur 3 dargestellt. Dabei ist zu erkennen, dass die Sonotrode 6 entweder flache Pins 7 aufweist, die eine direkte Kontaktebene zur Auflagefläche 3 aufweisen, oder wie in dem mittleren Beispiel dargestellt in einer Spitze 8 die Auflagefläche 3 kontaktieren.

Der Energieeintrag liegt zwischen 200 - 600 W vom Generator abgegebener Leistung für den einzelnen Schweißpunkt.

Beispielweise soll der Abstand der einzelnen Schweißpunkten mindestens 5 mm sein, wobei der zeitliche Abstand des Setzens der Schweißpunkte von den maschinellen Möglichkeiten bestimmt ist, aber vorzugsweise unter 1 Sekunde liegt.

### Bezugszeichenliste

1 Stoßfänger
2 Halter
3 Auflagefläche
4 Aufnahme
5 Laschen
6 Sonotrode
7 Pins
8 Spitze
9 Bereich
10 Schweißpfad
11 Schweißpunkt

## Patentansprüche

1. Verfahren zum Ultraschallverschweißen zweier Kunststoffkomponenten (1, 2) unter Verwendung einer Sonotrode (6), wobei die Energie zum Verschweißen über mindestens einen Pin (7) der Sonotrode (6) in die Kunststoffkomponenten eingebracht wird, wobei die beiden Kunststoffkomponenten (1, 2) Schritt für Schritt punktuell miteinander verschweißt werden, **dadurch gekennzeichnet, dass** der jeweils nachfolgende Schritt der Verschweißung in einem Bereich (9) erfolgt, der bereits durch den vorhergehenden Schritt der Verschweißung beansprucht und wiederentspannt ist.

2. Verfahren nach Anspruch 1 **dadurch gekennzeichnet, dass** die einzelnen Schritte der Verschweißung (S1, S2, S3...) räumlich nah aufeinander entlang eines Schweißpfads (10) erfolgen.

3. Verfahren nach Anspruch 1 oder 2, **dadurch gekennzeichnet, dass** die einzelnen Schritte der Verschweißung (S1, S2, S3...) in einem zeitlichen Abstand aufeinanderfolgen, die es dem Material der Kunststoffkomponenten im Bereich (9) einer Verschweißung (11) ermöglicht, sich zu entspannen.

4. Verfahren nach Anspruch 2 oder 3, **dadurch gekennzeichnet, dass** die Sonotrode (6) entlang des Schweißpfads (10) geführt wird.

5. Verfahren nach einem der Ansprüche 2 bis 4, **dadurch gekennzeichnet, dass** der Schweißpfad (10) sich linear, kreisförmig oder einer beliebigen Kontur folgend erstreckt.

6. Verfahren nach einem der vorhergehenden Ansprüche, **dadurch gekennzeichnet, dass** die Pins (7) der Sonotrode (6) flach, mit einer Spitze (8) oder mit anderer spezifischen Kontur auf den zu verschweißenden Kunststoffkomponenten (1, 2) aufgesetzt werden.

7. Verfahren nach einem der vorhergehenden Ansprüche, **dadurch gekennzeichnet, dass** die Kunststoffkomponenten (1, 2) Stoßfänger und Halter für Sensoren, Verstärkungsteile und andere Teile mit dünnerer Wandstärke sind.

8. Kunststoffkomponenten (1,2) verbunden nach dem Verfahren nach einem der Ansprüche 1 bis 7.

## Claims

1. Method for the ultrasonic welding of two plastic components (1, 2) using a sonotrode (6), wherein the energy for the welding is introduced into the plastic components via at least one pin (7) of the sonotrode (6), wherein the two plastic components (1, 2) are spot-welded to one another step by step, **characterized in that** the respectively subsequent step of the welding is carried out in a region (9) which has already been loaded and relieved of tension as a result of the preceding step of the welding.

2. Method according to Claim 1, **characterized in that** the individual steps of the welding (S1, S2, S3...) are performed spatially close to one another along a weld path (10).

3. Method according to Claim 1 or 2, **characterized in that** the individual steps of the welding (S1, S2, S3...) follow one another at a time interval which makes it possible to relieve the material of the plastic components of tension in the region (9) of a weld (11).

4. Method according to claim 2 or 3, **characterized in that** the sonotrode (6) is guided along the weld path (10).

5. Method according to claim 2 to 4, **characterized in that** the weld path (10) extends linearly, circularly, or such that it follows any desired contour.

6. Method according to one of the preceding claims, **characterized in that** the pins (7) of the sonotrode (6) are placed flat, with a tip (8) or with another specific contour on the plastic components (1, 2) to be welded.

7. Method according to one of the preceding claims, **characterized in that** the plastic components (1, 2) are bumpers and mounts for sensors, reinforcing parts and other parts with a relatively thin wall thickness.

8. Plastic components (1, 2) bonded in accordance with the method according to one of Claims 1 to 7.

## Revendications

1. Procédé de soudage par ultrasons de deux composants (1, 2) en matière plastique à l'aide d'une sonotrode (6), l'énergie de soudage étant injectée dans les composants en matière plastique par le biais d'au moins une broche (7) de la sonotrode (6), les deux composants (1, 2) en matière plastique étant soudés l'un à l'autre étape par étape, **caractérisé en ce que** l'étape de soudage suivante est effectuée dans une zone (9) qui est déjà sollicitée par l'étape de soudage précédente et à nouveau détendue.

2. Procédé selon la revendication 1, **caractérisé en ce que** les étapes de soudage individuelles (S1, S2, S3...) sont effectuées spatialement à proximité les unes des autres le long d'un trajet de soudage (10).

3. Procédé selon la revendication 1 ou 2, **caractérisé en ce que** les étapes de soudage individuelles (S1, S2, S3...) se succèdent avec un intervalle de temps permettant à la matière des composants en matière plastique dans la zone (9) d'une soudure (11) de se détendre.

4. Procédé selon la revendication 2 ou 3, **caractérisé en ce que** la sonotrode (6) est guidée le long du trajet de soudage (10).

5. Procédé selon l'une des revendications 2 à 4, **caractérisé en ce que** le trajet de soudage (10) s'étend de manière linéaire, circulaire ou suivant un contour quelconque.

6. Procédé selon l'une des revendications précédentes, **caractérisé en ce que** les broches (7) de la sonotrode (6) sont posées à plat, avec une pointe (8) ou avec un autre contour spécifique sur les composants (1, 2) en matière plastique à souder.

7. Procédé selon l'une des revendications précédentes, **caractérisé en ce que** les composants (1, 2) en matière plastique sont des pare-chocs et des supports de capteurs, des pièces de renfort et d'autres pièces à parois plus fines.

8. Composants (1, 2) en matière plastique reliés selon le procédé selon l'une des revendications 1 à 7.
